(19) Europäisches Patentamt
European Patent Office
Office européen des brevets

(11) EP 4 596 601 A1

(12) **EUROPEAN PATENT APPLICATION**
published in accordance with Art. 153(4) EPC

(43) Date of publication:
**06.08.2025 Bulletin 2025/32**

(21) Application number: **23871283.0**

(22) Date of filing: **18.05.2023**

(51) International Patent Classification (IPC):
***C08G 63/688*** *(2006.01)*

(52) Cooperative Patent Classification (CPC):
**C08G 63/688**

(86) International application number:
**PCT/JP2023/018596**

(87) International publication number:
**WO 2024/070037 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 JP 2022157692**

(71) Applicant: **TOYOBO MC Corporation**
**Osaka 530-0001 (JP)**

(72) Inventors:
- **SASAKI, Hironao**
  **Osaka-shi, Osaka 530-0001 (JP)**
- **TOGAWA, Keiichiro**
  **Otsu-shi, Shiga 520-0292 (JP)**
- **HIRASAWA, Fujio**
  **Osaka-shi, Osaka 530-0001 (JP)**
- **HIRONAKA, Nobuyuki**
  **Osaka-shi, Osaka 530-0001 (JP)**
- **SHIMIZU, Hideki**
  **Tsuruga-shi, Fukui 914-8550 (JP)**
- **WATANABE, Chisa**
  **Otsu-shi, Shiga 520-0292 (JP)**
- **YAMANE, Ryouhei**
  **Otsu-shi, Shiga 520-0292 (JP)**

(74) Representative: **Müller-Boré & Partner Patentanwälte PartG mbB**
**Friedenheimer Brücke 21**
**80639 München (DE)**

(54) **CO-POLYESTER RESIN**

(57) An object of the present invention is to solve a problem that when products such as films, molded products, or fibers are continuously produced from a copolymerized polyester resin copolymerized with diethylene glycol and sodium sulfoisophthalate for improving transparency and moldability, die contamination and adhesion of foreign matter to the products occur and a problem that during recycling of a copolymerized polyester resin copolymerized with diethylene glycol and sodium sulfoisophthalate, the resin is colored or the molecular weight of the resin is reduced. A copolymerized polyester resin containing terephthalic acid as a main dicarboxylic acid component and ethylene glycol as a main glycol component, wherein when a total amount of dicarboxylic acid components in all polyester resin components is taken as 100 mol%, a ratio of the terephthalic acid component to all the dicarboxylic acid components is 80 to 94.95 mol%, a ratio of the aliphatic acid having 2 to 4 carbon atoms to all the dicarboxylic acid components is 5 to 20 mol%, and a ratio of sodium sulfoisophthalate to all the dicarboxylic acid components is 0.05 to 10 mol%, when a total amount of glycol components is taken as 100 mol%, a ratio of diethylene glycol to all glycol components is 1 to 22 mol%, a content of a free cyclic monomer consisting of terephthalic acid, sodium sulfoisophthalate, and ethylene glycol is 40 ppm or less, and a content of a free linear oligomer consisting of terephthalic acid, sodium sulfoisophthalate, and ethylene glycol is 60 ppm or less.

EP 4 596 601 A1

## Description

Technical Field of the Invention

The present invention relates to a copolymerized polyester resin that hardly causes contamination and foreign matter adhesion around dies during production of products such as films while having not only excellent transparency and moldability but also excellent recyclability.

Background Art

Polyester or, particularly, polyethylene terephthalate (PET) prepared from terephthalic acid (hereinafter, it is sometimes abbreviated as TPA) and ethylene glycol (hereinafter, it is sometimes abbreviated as EG) as starting materials is excellent in chemical and physical properties. Therefore, it has been widely used for container, film, sheet and fiber, etc.

Among the polyethylene terephthalate (PET), a polyester resin copolymerized with diethylene glycol (hereinafter, it is sometimes abbreviated as DEG) (hereinafter, it is sometimes abbreviated as copolymerized polyester resin) has recently received public attention due to its excellent transparency, moldability, shock resistance, thermal resistance, etc. Accordingly, it has been used in various uses or, particularly as a material polymer for molded product such as film, sheet, injection-molded product, profile-molded product, etc. In this case, depending on the intended use, an aliphatic dicarboxylic acid is further copolymerized in addition to terephthalic acid so as to reduce the melting point and glass transition temperature of a resulting copolymerized polyester resin for imparting flexibility, or so as to adjust degree of crystallization and crystallization speed.

Further, a polyester resin copolymerized with sodium sulfoisophthalate (hereinafter, it is sometimes abbreviated as GCM) (hereinafter, it is sometimes abbreviated as copolymerized polyester resin) has recently received public attention due to its excellent biodegradability. Accordingly, it has been used in various uses or, particularly as a material polymer for molded product such as film, sheet, injection-molded product, profile-molded product, etc. (see Patent Documents 1 to 6).

However, copolymerized polyester resins produced by techniques disclosed in Patent Documents 1 to 6 have a problem that when products such as films, molded products, or fibers are continuously produced from these resins, low-melting foreign matter adheres around dies or molds and is then transferred onto and adheres to the surfaces of the products so that the commercial value of the products is reduced. Further, there is also a problem that during recycling, the resins are colored or the molecular weights of the resins are reduced.

Prior Art Documents

Patent Documents

Patent Document 1: Japanese Patent Application Laid-Open (JP-A) No. 2010-150542
Patent Document 2: Japanese Patent No. 4755995
Patent Document 3: Japanese Patent No. 4614963
Patent Document 4: Japanese Patent Application Laid-Open (JP-A) No. 2007-500769
Patent Document 5: Japanese Patent No. 4807952
Patent Document 6: Japanese Patent No. 5345749

Disclosure of the Invention

Problem that the Invention is to Solve

The present invention has been created so as to solve such problems of the conventional art. It is therefore an object of the present invention to solve a problem that when products such as films, molded products, or fibers are continuously produced from a copolymerized polyester resin copolymerized with diethylene glycol and sodium sulfoisophthalate for improving transparency and moldability, die contamination and adhesion of foreign matter to the products occur and a problem that during recycling of a copolymerized polyester resin copolymerized with diethylene glycol and sodium sulfoisophthalate for improving transparency and moldability, the resin is colored or the molecular weight of the resin is reduced.

Means for Solving the Problem

In order to achieve the above object, the present inventors have intensively studied the cause of die contamination and adhesion of foreign matter to products in a copolymerized polyester resin copolymerized with diethylene glycol and sodium sulfoisophthalate, and as a result, have found that specific cyclic monomer and linear oligomer (hereinafter, it is sometimes referred to as by-product oligomers) generated as by-products during production of the copolymerized polyester resin cause the die contamination and adhesion of foreign matter to products, and a copolymerized polyester resin that hardly causes the problem of die contamination and adhesion of foreign matter to products can be provided by reducing the contents of these by-products to certain values or less. Further, the present inventors have intensively studied the cause of resin coloring and molecular weight reduction during recycling, and as a result, have found that diethylene glycol and sodium sulfoisophthalate used as materials for a copolymerized polyester resin improve transparency and moldability but reduce thermal stability and thermal-oxidation stability of a copolymerized polyester resin to be obtained. Therefore, it is considered that the resin is deteriorated by heating during film formation or molded product production so that films or molded products are colored or the molecular weight of the resin is reduced. Then, the present inventors have studied a method for improving the thermal stability and thermal-oxidation stability of a copolymerized polyester resin and found that it is important to control the carboxyl end group concentration (AV) of the copolymerized polyester resin so as to fall within a certain range and to use specific two types of catalysts in combination for polymerization. These findings have led to the completion of the present invention.

The present invention has been achieved on the basis of the above findings and has the constituent features of the following (1) to (12).

(1) A copolymerized polyester resin containing terephthalic acid as a main dicarboxylic acid component and ethylene glycol as a main glycol component, wherein when a total amount of dicarboxylic acid components in all polyester resin components is taken as 100 mol%, a ratio of the terephthalic acid component to all the dicarboxylic acid components is 79.95 to 94.95 mol%, a ratio of the aliphatic acid having 2 to 4 carbon atoms to all the dicarboxylic acid components is 5 to 20 mol%, and a ratio of sodium sulfoisophthalate to all the dicarboxylic acid components is 0.05 to 10 mol%, when a total amount of glycol components is taken as 100 mol%, a ratio of diethylene glycol to all glycol components is 1 to 22 mol%, a content of a free cyclic monomer consisting of terephthalic acid, sodium sulfoisophthalate, and ethylene glycol is 40 ppm or less, and a content of a free linear oligomer consisting of terephthalic acid, sodium sulfoisophthalate, and ethylene glycol is 60 ppm or less.

(2) The copolymerized polyester resin according to (1), wherein the copolymerized polyester resin has a color b value of from -5.0 to 15.0.

(3) The copolymerized polyester resin according to (1), wherein the copolymerized polyester resin has a carboxyl end group concentration (AV) of from 3 to 25 eq/t.

(4) The copolymerized polyester resin according to (1), wherein the copolymerized polyester resin contains aluminum atom and phosphorus atom, wherein a content of the aluminum atom in the copolymerized polyester resin is 15 to 40 ppm, and wherein a molar ratio of the phosphorus atom to the aluminum atom in the copolymerized polyester resin is more than 0 and not more than 2.6.

(5) The copolymerized polyester resin according to (1), wherein the copolymerized polyester resin further contains an alkali metal atom and/or an alkaline-earth metal atom derived from an alkali metal compound and/or an alkaline-earth metal compound other than sodium sulfoisophthalate, and a content of the alkali metal atom and/or the alkaline-earth metal atom in the copolymerized polyester resin is 1 to 100 ppm.

(6) The copolymerized polyester resin according to any of (1) to (5), wherein, when a corrugated molded plate is prepared by molding the copolymerized polyester resin and a haze value is measured on an area of the corrugated molded plate having a thickness of 3 mm, the haze value is 10% or less.

(7) A molded product, characterized in that, it contains the copolymerized polyester resin mentioned in any of (1) to (5).

(8) A heat-shrinkable film, characterized in that, it contains the copolymerized polyester resin mentioned in any of (1) to (5).

(9) A fiber, characterized in that, it contains the copolymerized polyester resin mentioned in any of (1) to (5).

(10) A non-woven fabric, characterized in that, it contains the copolymerized polyester resin mentioned in any of (1) to (5).

(11) An adhesive, characterized in that, it contains the copolymerized polyester resin mentioned in any of (1) to (5).

(12) A coating material, characterized in that, it contains the copolymerized polyester resin mentioned in any of (1) to (5).

Advantages of the Invention

The copolymerized polyester resin of the present invention hardly causes die contamination and adhesion of

foreign matter to products such as films, molded products, or fibers during continuous production of the products while having transparency and moldability as the advantages of using diethylene glycol and sodium sulfoisophthalate, and further hardly causes resin coloring and molecular weight reduction during recycling.

Best Mode for Carrying Out the Invention

Hereinafter, the copolymerized polyester resin of the present invention will be specifically illustrated.

A copolymerized polyester resin of the present invention contains terephthalic acid as a main dicarboxylic acid component and ethylene glycol as a main glycol component, and is obtained by copolymerization with diethylene glycol and sodium sulfoisophthalate so as to achieve transparency and moldability. The problem of die contamination and adhesion of foreign matter to products is effectively prevented by reducing the contents of specific cyclic monomer and linear oligomer generated as by-products during polymerization to certain values or less. Further, the problem of resin coloring or molecular weight reduction during recycling is effectively prevented by controlling the carboxyl end group concentration (AV) of the copolymerized polyester resin to fall within a certain range and by using specific two types of catalysts in combination for polymerization.

The copolymerized polyester resin of the present invention contains terephthalic acid as a main dicarboxylic acid component. Specifically, the content of terephthalic acid is such that when the total amount of dicarboxylic acid components is taken as 100 mol%, the ratio of terephthalic acid to all the dicarboxylic acid components is 79.95 to 94.95 mol%, preferred to be 85 to 94.95 mol%, and more preferred to be 90 to 94.95 mol%.

The copolymerized polyester resin of the present invention further contains, as a dicarboxylic acid component, an aliphatic acid having 2 to 4 carbon atoms in addition to terephthalic acid. The aliphatic acid having 2 to 4 carbon atoms plays a role in reducing the melting point and glass transition temperature of a resulting copolymerized polyester resin for imparting flexibility, or in adjusting degree of crystallization and crystallization speed. Examples of the aliphatic acid having 2 to 4 carbon atoms include oxalic acid (with two carbon atoms), malonic acid (with three carbon atoms), and succinic acid (with four carbon atoms). The content of the aliphatic acid having 2 to 4 carbon atoms may appropriately be adjusted depending on the intended use of the copolymerized polyester resin, but the ratio of the aliphatic acid having 2 to 4 carbon atoms to all the dicarboxylic acid components is generally 5 to 20 mol%, preferably 7 to 18 mol%, and more preferably 8 to 15 mol%, when a total amount of dicarboxylic acid components in all polyester resin components is taken as 100 mol%. As the content of the aliphatic acid having 2 to 4 carbon atoms increases, the melting point, glass transition temperature, degree of crystallization, and crystallization speed of a resulting copolymerized polyester resin tend to reduce.

The copolymerized polyester resin of the present invention contains not only terephthalic acid and aliphatic acid having 2 to 4 carbon atoms, but also sodium sulfoisophthalate as a dicarboxylic acid component so as to improve biodegradability. Specifically, the content of sodium sulfoisophthalate is such that when the total amount of dicarboxylic acid components is taken as 100 mol%, the ratio of sodium sulfoisophthalate to all the dicarboxylic acid components is 0.05 to 10 mol%, preferred to be 0.1 to 5 mol%, and more preferred to be 0.2 to 3 mol%. If the content of sodium sulfoisophthalate is less than the above lower limit, the haze value is high, that is, the result of DSC measurement is poor. On the other hand, if the content of sodium sulfoisophthalate exceeds the above upper limit, the amounts of free cyclic monomer and linear oligomer that will be described later increase so that die contamination and adhesion of foreign matter to products frequently occur.

The copolymerized polyester resin of the present invention may also contain other dicarboxylic acid components other than terephthalic acid, aliphatic acid having 2 to 4 carbon atoms, and sodium sulfoisophthalate. As to other dicarboxylic acid components, there are exemplified (1) an aromatic dicarboxylic acid such as isophthalic acid, orthophthalic acid, 2,6-naphthalenedicarboxylic acid, diphenyl-4,4'-dicarboxylic acid and diphenoxyethane dicarboxylic acid as well as functional derivatives thereof and (2) an alicyclic dicarboxylic acid such as hexahydroterephthalic acid, hexahydroisophthalic acid and cyclohexanedicarboxylic acid as well as functional derivatives thereof.

The copolymerized polyester resin of the present invention contains ethylene glycol as a main glycol component. Specifically, the content of ethylene glycol is such that when the total amount of glycol components is taken as 100 mol%, the ratio of ethylene glycol to all the glycol components is preferred to be 50 to 99 mol%, more preferred to be 70 to 99 mol%, further preferred to be 80 to 99 mol%, and particularly preferred to be 90 to 99 mol%.

The copolymerized polyester resin of the present invention contains not only ethylene glycol, but also diethylene glycol as a glycol component so as to improve transparency and moldability. Specifically, the content of diethylene glycol is such that when the total amount of glycol components is taken as 100 mol%, the ratio of diethylene glycol to all the glycol components is 1 to 22 mol%, preferred to be 1 to 20 mol%, and more preferred to be 1 to 18 mol%. When the content of diethylene glycol falls within the above range, it is possible to obtain a copolymerized polyester resin having high transparency, that is, an amorphous copolymerized polyester resin. If the content of diethylene glycol is less than the above lower limit, a crystalline copolymerized polyester resin is obtained, and therefore molded products or films are poor in transparency, that is, cannot achieve sufficient transparency and therefore tend to have no commercial value. On the other hand, if the content of diethylene glycol exceeds the above upper limit, the recyclability (thermal stability) lowers, and

therefore the resin tends to be colored, and the content of AA tends to increase.

Diethylene glycol is generated also by condensation of ethylene glycol during polymerization of the copolymerized polyester resin. The amount of diethylene glycol generated by this condensation depends on polymerization conditions and a device used for production, but is about 0.5 to 2.0 mol% relative to all the glycol components. The amount of diethylene glycol to be added as a raw material may be determined in consideration of the amount of diethylene glycol generated by the condensation.

Here, "amorphous" can be determined by the following method. A sample is allowed to stand in a Yamato DP63 drier at 120°C for 120 minutes. Then, this sample is heated at a rate of 20°C/min from -100°C to 300°C, then cooled at a rate of 50°C/min down to -100°C, and then heated at a rate of 20°C/min from -100°C to 300°C, using a differential scanning calorimeter (DSC). When there is no melting peak in any of the two heating processes, the sample is judged as "amorphous". Since the copolymerized polyester resin of the present invention is amorphous, it can have sufficient transparency which allows the resin to be advantageously used even for a particularly thick molded product. In other words, the fact that the resin is judged as "amorphous" under this measuring condition means that the transparency of the film can be kept in high quality and further that a sufficient transparency can be maintained even if the resin is made into a thick film.

The copolymerized polyester resin of the present invention may also contain other glycol components other than ethylene glycol and diethylene glycol. As to other glycol components, there are exemplified (1) an aliphatic glycol such as tetramethylene glycol, pentamethylene glycol and hexamethylene glycol, (2) an alicyclic glycol such as 1,3-cyclohexanedimethanol and 1,4-cyclohexanedimethanol and (3) an aromatic glycol such as p-xylylene glycol and m-xylylene glycol.

Preferably, the copolymerized polyester resin of the present invention contains a multifunctional compound having three or more carboxyl groups, hydroxyl groups or ester-forming groups thereof (such as trimellitic acid, pyromellitic acid, glycerol or trimethylolpropane) in an amount of 0.001 to 5% by mole to the acid component and/or the glycol component of the copolymerized ester resin, in view of enhancing the moldability during profile extrusion.

The copolymerized polyester resin of the present invention is essentially characterized by reducing the contents of specific cyclic monomer and linear oligomer generated as by-products during polymerization to certain values or less so as to effectively prevent the problem of die contamination and adhesion of foreign matter to products. Specifically, in the copolymerized polyester resin of the present invention, a content of a free cyclic monomer consisting of terephthalic acid, sodium sulfoisophthalate, and ethylene glycol is 40 ppm or less, and a content of a free linear oligomer consisting of terephthalic acid, sodium sulfoisophthalate, and ethylene glycol is 60 ppm or less. In the present invention, the free cyclic monomer consisting of terephthalic acid, sodium sulfoisophthalate, and ethylene glycol represents a cyclic monomer in which terephthalic acid, sodium sulfoisophthalate, sodium sulfoisophthalate, ethylene glycol, ethylene glycol, and ethylene glycol are linked in this order in a circular manner (hereinafter, it is abbreviated as TS2E3), and the linear oligomer consisting of terephthalic acid, sodium sulfoisophthalate, and ethylene glycol represents a linear oligomer in which terephthalic acid, terephthalic acid, sodium sulfoisophthalate, ethylene glycol, ethylene glycol, ethylene glycol, and ethylene glycol are linked in this order in a circular manner (hereinafter, it is abbreviated as L-T2SE4). In the present invention, "copolymerized polyester resin" not only stands for a chemical substance which is a polyester but also stands for such a one which contains an oligomer component such as TS2E3 and L-T2SE4 as well as the catalytic component which will be mentioned later. However, when a chemical substance being called a polyester is illustrated, "copolymerized polyester resin" may be used for the sake of convenience.

The content of TS2E3 needs to be 40 ppm or less, preferably 35 ppm or less and more preferably 30 ppm or less. When the content of TS2E3 exceeds the above upper limit, the area near the resin outlet in the die of the extrusion molding machine during production of film or fiber is significantly contaminated whereby the adhered foreign matter is transferred to a surface of the molded product. As a result, surface condition becomes bad and the transparency is deteriorated whereby the commercial value is lowered. Moreover, when the molded product is continuously produced by the injection molding, an exhaust pipe of the mold for injection molding is clogged whereby normal molded product cannot be obtained. The lower limit of the content of TS2E3 is 1 ppm in view of economy during the production. The content of TS2E3 is the value quantified by a measuring method in Examples which will be mentioned later.

The content of L-T2SE4 needs to be 60 ppm or less, preferably 55 ppm or less and more preferably 50 ppm or less. When the content of L-T2SE4 exceeds the above upper limit, the area near the resin outlet in the die of the extrusion molding machine during production of film or fiber is significantly contaminated whereby the adhered foreign matter is transferred to a surface of the molded product. As a result, surface condition becomes bad and the transparency is deteriorated whereby the commercial value is lowered. Moreover, when the molded product is continuously produced by the injection molding, an exhaust pipe of the mold for injection molding is clogged whereby normal molded product cannot be obtained. The lower limit of the content of L-T2SE4 is 1 ppm in view of economy during the production. The content of L-T2SE4 is the value quantified by a measuring method in Examples which will be mentioned later.

A mechanism in which L-T2SE4 and TS2E3 cause contamination around dies and foreign matter adhesion is not clear but can be considered as follows. The melting point and glass transition temperature of L-T2SE4 are reduced due to

the influence of steric hindrance of ethylene glycol and sulfoisophthalic acid in L-T2SE4, and further the melting point and glass transition temperature of TS2E3 are lower than those of L-T2SE4 due to the influence of steric hindrance of ethylene glycol and sulfoisophthalic acid in TS2E3, and therefore strong tackiness is developed. Due to the synergistic effect of TS2E3 and L-T2SE4, adhesion during molding or to dies of film extrusion-molding machines frequently occurs.

The copolymerized polyester resin of the present invention is preferred to have a carboxyl end group concentration of 3 to 25 equivalents per one ton of the polymer. More preferably, the carboxyl end group concentration is 5 to 23 equivalents per one ton of the polymer. When the carboxyl end group concentration is within the above range, it is possible to suppress the coloration of the copolymerized polyester resin. When it is allowed to sacrifice the suppression of the coloration of the copolymerized polyester resin to some extent, the carboxyl end group concentration may be 32 equivalents or less per one ton of the polymer. When the productivity (reaction time) is not considered, the lower limit of the carboxyl end group concentration may be 0 equivalent per one ton of the polymer.

A number-average molecular weight of the copolymerized polyester resin of the present invention is preferred to be 2000 to 30000, more preferred to be 2500 to 28000, and further preferred to be 3000 to 27000. When the number-average molecular weight is less than the above lower limit, crystallinity may rise and haze may become high. Further, the molded product may lack strength and elongation due to insufficient cohesive force of the resin and the product may become brittle whereby it cannot be used. On the contrary, when the number-average molecular weight exceeds the above upper limit, the melt viscosity may become too high whereby the optimum temperature for various molding processes may also rise and the residence time may increase and the sheet-preparation property may lower. In addition, the amounts of TS2E3 and L-T2SE4 may increase and, as a result, transparency of the molded product may be deteriorated due to die contamination and foreign matter adhesion.

A glass transition temperature of the copolymerized polyester resin of the present invention is preferred to be 40°C or higher and lower than 120°C. It is more preferred to be 45°C or higher and lower than 115°C, furthermore preferred to be 50°C or higher and lower than 110°C, and particularly preferred to be 50°C or higher and lower than 70°C. The glass transition temperature mentioned here stands for a value measured by using a differential scanning calorimeter (DSC) at a temperature rise of 20°C/min. When the glass transition temperature is less than the above lower limit, the film and the molded product by profile extrusion may be heat-distorted in case they are used outdoors in summertime or in case they are transported or stored in a storehouse in a tightly-closed condition in summertime. When the glass transition temperature exceeds the above upper limit, sheet-preparation property and transparency tend to lower and the product cannot be used in some applications.

A color b value of the copolymerized polyester resin of the present invention is preferred to be -5.0 to 15.0. The lower limit of the color b value is more preferred to be -3.0, and further preferred to be -2.5. The upper limit is more preferred to be 14.0, and further preferred to be 13.0. When the color b value exceeds the above upper limit, yellowish color of the copolymerized polyester resin becomes strong and is not favorable in view of the color tone. On the other hand, when the color b value is less than the above lower limit, the blueish color of the copolymerized polyester resin becomes significant and the product cannot be used in some applications.

When the copolymerized polyester resin of the present invention is molded into a corrugated molded plate at a mold temperature of 10°C, the haze value measured on an area of the corrugated molded plate having a thickness of 3 mm is preferred to be 10% or less. It is further preferred to be 9% or less and particularly preferred to be 8% or less. When the haze value exceeds the above upper value, transparency of the molded product or the film may be deteriorated and the product cannot be used in the applications which require severe level of transparency.

In the copolymerized polyester resin of the present invention, other ingredients may also be appropriately added thereto depending on the applications. For example, shock resistance enhancer, filler, ultraviolet absorber, surface finisher, lubricant, light stabilizer, pigment, antistatic agent, antibacterial agent, crosslinking agent, sulfur-type antioxidant, flame retardant, plasticizer, processing aid, foaming agent, etc. may be added. The copolymerized polyester resin of the present invention is advantageously molded into various molded products by means of extrusion blow molding, draw molding, injection molding, profile extrusion molding, calender processing molding, etc. which have been commonly used in PET.

The copolymerized polyester resin of the present invention can appropriately be used for various purposes requiring transparency and moldability, and can be used as, for example, a raw material for molded products, heat-shrinkable films, fibers, non-woven fabrics, adhesives, and coating materials.

Next, a preparation method of the copolymerized polyester resin of the present invention will be illustrated. The copolymerized polyester resin of the present invention can be prepared by any of a production method by direct esterification and polycondensation reaction and a production method by transesterification and polycondensation reaction. Those reactions may be conducted in a continuous reactor or in a batch reactor. In view of economy and quality stability, the continuous reactor is preferable.

In the continuous reactor (a continuous polycondensation method), each of esterification reaction, transesterification reaction and melt polycondensation reaction may be conducted in one step, but preferably it is conducted by dividing into plural steps. When the esterification reaction or the transesterification reaction is conducted by dividing into

plural steps, a number of the reactors is preferred to be two or three. When the melt polycondensation reaction is conducted by dividing into plural steps, a number of the reactors is preferred to be three to seven.

When the copolymerized polyester resin of the present invention is produced by the continuous polycondensation method, a slurry containing 1.02 to 1.5 moles, preferably 1.03 to 1.4 moles of total glycols to 1 mole of total dicarboxylic acids or ester derivatives thereof is prepared. Then, the prepared slurry is continuously supplied to an esterification reaction step containing the oligomer. Temperature for the esterification reaction is usually 240 to 270°C and preferably 250 to 265°C. Pressure in the reactor is usually 0.2 MPa or lower and preferably 0.01 to 0.05 MPa. Temperature for the polycondensation reaction is usually 265 to 285°C and preferably 270 to 280°C. Pressure in the reactor is usually 1.5 hPa or lower and preferably 0.5 hPa or lower. Reaction time for the esterification reaction is preferred to be 5 hours or less and particularly preferred to be 2 to 3.5 hours. Reaction time for the polycondensation reaction is preferred to be 3 hours or less and particularly preferred to be 1 to 2 hour(s).

When the copolymerized polyester resin of the present invention is produced by the batch polycondensation method, temperature for the esterification reaction is usually 220 to 250°C and preferably 230 to 245°C. Pressure in the reactor is usually 0.2 to 0.4 MPa and preferably 0.25 to 0.30 MPa. The polycondensation reaction may be conducted either in one step or by dividing into plural steps. When it is conducted in one step, pressure reduction and temperature rise are done gradually, and the final temperature is set to be 260 to 280°C, preferably 265 to 275°C, and the final pressure is usually set to be 3 hPa or less and preferably 0.5 hPa or less. Reaction time for the esterification reaction is preferred to be 4 hours or less and particularly preferred to be 2 to 3 hours. Reaction time for the polycondensation reaction is preferred to be 5 hours or less and particularly preferred to be 1 to 3 hour(s).

When a low polycondensate is produced by the continuous transesterification reaction, a solution containing dimethyl terephthalate and 1.1 to 1.6 moles, preferably 1.2 to 1.5 moles of glycol to 1 mole of dimethyl terephthalate is prepared. Then, the prepared solution is continuously supplied to the transesterification reaction step. Temperature for the transesterification reaction is usually 200 to 270°C and preferably 230 to 265°C. In the case of the transesterification method, it is necessary to use a transesterification catalyst besides the polycondensation catalyst. The resulting low polycondensate is reacted in the same manner as in the case of the above continuous polycondensation.

When the low polycondensate is produced by the batch transesterification method, dimethyl terephthalate and 2.3 to 2.0 moles, preferably 2.2 to 2.0 moles of glycol to 1 mole of dimethyl terephthalate are added to a batch reactor and the reaction is conducted in the presence of the transesterification catalyst. The resulting low polycondensate is subjected to a polycondensation in the same manner as in the case of the above esterification reaction.

With regard to the polycondensation catalyst, at least one of antimony compound, germanium compound, titanium compound and aluminum compound can be used. As to the antimony compound, there are exemplified antimony trioxide, antimony pentoxide, antimony acetate and antimony ethylene glycoxide. Among them, antimony trioxide, antimony acetate and antimony ethylene glycoxide are preferred, and antimony trioxide is particularly preferred. Content of the antimony compound is preferred to be 50 to 400 ppm in terms of antimony element to the produced copolymerized polyester resin. It is further preferred to be 100 to 350 ppm and particularly preferred to be 150 to 300 ppm.

As to the germanium compound, there are exemplified crystalline germanium dioxide, non-crystalline germanium dioxide, germanium tetraoxide, germanium hydroxide, germanium oxalate, germanium chloride, germanium tetraethoxide, germanium tetra-n-butoxide and germanium phosphite. Among them, crystalline germanium dioxide and non-crystalline germanium dioxide are further preferred, and non-crystalline germanium dioxide is particularly preferred. Content of the germanium compound is preferred to be 10 to 100 ppm in terms of germanium element to the produced copolymerized polyester resin. It is further preferred to be 30 to 70 ppm and particularly preferred to be 30 to 50 ppm.

As to the titanium compound, there are exemplified tetraalkyl titanate (such as tetraethyl titanate, tetraisopropyl titanate, tetra-n-propyl titanate and tetra-n-butyl titanate) as well as partially hydrolyzed compound thereof, titanium acetate, a titanyl oxalate compound (such as titanyl oxalate, ammonium titanyl oxalate, sodium titanyl oxalate, potassium titanyl oxalate, calcium titanyl oxalate and strontium titanyl oxalate), titanium trimellitate, titanium sulfate, titanium chloride, a hydrolyzed product of titanium halide, titanium bromide, titanium fluoride, potassium hexaflurotitanate, ammonium hexafluorotitanate, cobalt hexafluorotitanate, manganese hexafluorotitanate, titanium acetylacetonate, a titanium complex with hydroxyl polyvalent carboxylic acid or nitrogen-containing polyvalent carboxylic acid, a composite oxide comprising titanium and silicon or zirconium and a reaction product of titanium alkoxide with phosphorus compound. Among them, titanium tetraisopropoxide, titanium tetrabutoxide and titanium potassium oxalate are preferred, and titanium tetrabutoxide is particularly preferred. Content of the titanium compound is preferred to be 1 to 50 ppm in terms of titanium element to the produced copolymerized polyester resin. It is further preferred to be 2 to 20 ppm and particularly preferred to be 3 to 10 ppm.

As to the polycondensation catalyst, an aluminum compound is particularly preferred in view of the recyclability (thermal stability and thermal-oxidation stability). The aluminum compound is preferred to be used together with a phosphorus compound. As to the aluminum compound constituting the polymerization catalyst used in the production of the copolymerized polyester resin of the present invention, known aluminum compound can be used without limitation.

As to the aluminum compound, there are specifically exemplified aluminum acetate, basic aluminum acetate, aluminum lactate, aluminum chloride, aluminum hydroxide and aluminum hydroxide chloride and an organoaluminum compound such as aluminum acetylacetonate and aluminum oxalate as well as partially hydrolyzed products thereof. Among the above, preferred ones are carboxylate, inorganic acid salt and chelate compound and, among them, more preferred ones are aluminum acetate, basic aluminum acetate, aluminum lactate, aluminum chloride, aluminum hydroxide, aluminum hydroxide chloride and aluminum acetylacetonate. Further preferred ones are aluminum acetate, basic aluminum acetate, aluminum chloride, aluminum hydroxide, and aluminum hydroxide chloride. The most preferred ones are aluminum acetate and basic aluminum acetate.

As to the amount of the aluminum compound used as the polymerization catalyst, it is preferred that 15 to 40 ppm remains as an aluminum atom to the total mass of the resulting polyester resin. More preferably, 17 to 38 ppm remains and further preferably, 20 to 35 ppm remains. When the remaining amount of the aluminum atom is less than the above range, the catalytic activity may not be sufficiently achieved. On the contrary, when the remaining amount of aluminum atom exceeds the above range, the thermal stability and thermal-oxidation stability may be lowered, or foreign matters caused by aluminum may be generated, or a coloration may be increased. As explained above, with regard to the aluminum compound, nearly 100% of its amount used as the polymerization catalyst remains even when the system is placed under an environment of reduced pressure during polymerization of the polyester resin. Therefore, as to the aluminum atom, it is possible to consider that the amount used as the polymerization catalyst is equal to the residual amount in the resin. When it is allowed to sacrifice the properties of the copolymerized polyester resin to some extent, the content of aluminum atom in the copolymerized polyester resin may be 9 to 42 ppm.

There is no particular limitation for the phosphorus compound used as the polymerization catalyst. However, a compound of phosphonic acid type or that of phosphinic acid type is preferable because they greatly enhance the catalytic activity. Among them, a compound of a phosphonic acid type is more preferable because it particularly greatly enhances the catalytic activity.

Preferably, the phosphorus compound has a phenol moiety in the same molecule. Such phosphorus compound greatly enhances the thermal stability and thermal-oxidation stability of the resin. There is no particular limitation therefor so far as it is a phosphorus compound having a phenol structure. However, one or more type(s) of compound(s) selected from a group consisting of a phosphonic acid-type compound and a phosphinic acid-type compound having a phenol moiety in the same molecule are preferable because they greatly enhance not only the catalytic activity but also the thermal stability and thermal-oxidation stability of the resin. Among them, one or more type(s) of a phosphonic acid-type compound having a phenol moiety in the same molecule are more preferable because they particularly greatly enhance not only the catalytic activity but also the thermal stability and thermal-oxidation stability of the resin.

As to the phosphorus compound having a phenol moiety in the same molecule, there are exemplified the compounds represented by the following general formulae (1) and (2).

$P(=O)R^1(OR^2)(OR^3)$ general formula (1)

$P(-O)R^1R^4(OR^2)$ general formula (2)

(In the general formulae (1) and (2), $R^1$ is a phenol moiety-containing $C_{6-50}$ hydrocarbon group, or a $C_{6-50}$ hydrocarbon group which contains a substituent such as hydroxyl group or halogen group or alkoxy group or amino group and a phenol moiety. $R^4$ is hydrogen, or is a $C_{1-50}$ hydrocarbon group, or is a $C_{1-50}$ hydrocarbon group which contains a substituent such as hydroxyl group or halogen group or alkoxy group or amino group. $R^2$ and $R^3$ each independently is hydrogen, or is a $C_{1-50}$ hydrocarbon group or is a $C_{1-50}$ hydrocarbon group which contains a substituent such as hydroxyl group and alkoxy group. The hydrocarbon group may also contain a branched structure, an alicyclic structure such as cyclohexyl or an aromatic ring structure such as phenyl and naphthyl. Terminals of $R^2$ and $R^4$ may also be bonded each other.

As to the phosphorus compound having a phenol moiety in the same molecule, there are exemplified p-hydroxyphenylphosphonic acid, dimethyl p-hydroxyphenylphosphonate, diethyl p-hydroxyphenylphosphonate, diphenyl p-hydroxyphenylphosphonate, bis(p-hydroxyphenyl) phosphinic acid, methyl bis(p-hydroxyphenyl) phosphinate, phenyl bis-(p-hydroxyphenyl) phosphinate, p-hydroxyphenyl phenylphosphinic acid, methyl (p-hydroxyphenyl) phenylphosphinate, phenyl (p-hydroxyphenyl) phenylphosphinate, p-hydroxyphenyl phosphinic acid, methyl p-hydroxyphenyl phosphinate and phenyl p-hydroxyphenyl phosphinate. Besides the above, a phosphorus compound represented by the following general formula (3) is also exemplified.

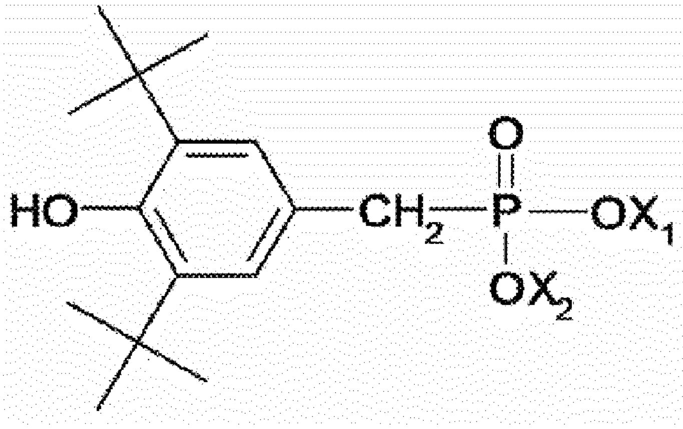

general formula (3)

In the general formula (3), $X_1$ and $X_2$ each is hydrogen, an alkyl group having 1 to 4 carbon(s) or a metal of mono- or higher valent.

When $X_1$ is a metal of di- or higher valent, $X_2$ may be absent. Furthermore, an anion corresponding to excessive valence number of the metal may also be arranged to the phosphorus compound.

Preferable metal is Li, Na, K, Ca, Mg or Al.

When the phosphorus compound as such having a phenol moiety in the same molecule is added during the polymerization of the polyester, the catalytic activity of the aluminum compound is enhanced. In addition, the thermal stability and thermal-oxidation stability of the polymerized polyester resin are enhanced. The reason therefor is likely to be that a hindered phenol moiety in the phosphorus compound enhances the thermal stability and thermal-oxidation stability of the polyester resin. When the residual amount of the phosphorus compound is 31 ppm or less, the above effect of enhancing the thermal stability and thermal-oxidation stability is reduced. As a result, the enhancing effect for the thermal stability and thermal-oxidation stability of the polyester resin of the present invention and the enhancing effect for the suppression of colorization of the polyester resin of the present invention may not be achieved.

Among the above, a phosphorus compound which is preferred to be used as the polycondensation catalyst is at least one phosphorus compound selected from the compounds represented by the following formulae (4) and (5).

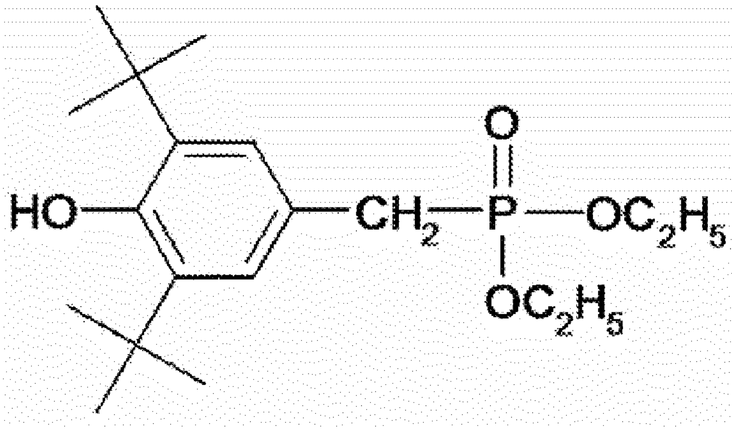

formula (4)

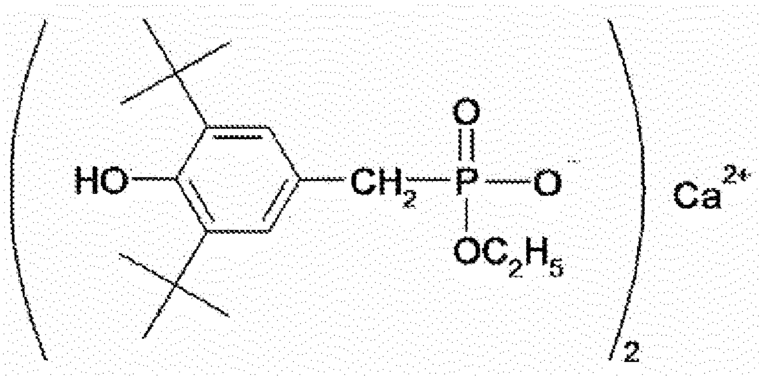

formula (5)

As to the compound represented by the above formula (4), Irganox 1222 (manufactured by BASF) is commercially available. As to the compound represented by the formula (5), Irganox 1425 (manufactured by BASF) is commercially available.

As to the amount of the phosphorus compound used as the polymerization catalyst, it is preferred that 31 to 104 ppm in terms of phosphorus atom remains to the total mass of the resulting copolymerized polyester resin. It is more preferably 39 to 102 ppm remains and further preferably 48 to 92 ppm remains. When the amount of the phosphorus compound is less than the above lower limit, the enhancing effect for the thermal stability and thermal-oxidation stability may be weaken. On the contrary, when the amount of the phosphorus compound exceeds the above upper limit, the polymerization activity may be lowered. As explained above, with regard to the phosphorus compound, a part of the amount firstly added to a system as the polymerization catalyst is removed to an outside of the system when the system is placed under an environment of reduced pressure during polymerization of the polyester resin. However, this removal rate is almost constant. Considering the removal rate, it can be said that there is no problem even if the amount of the phosphorus atom is defined by the residual amount instead of the amount used as the polymerization catalyst. When it is allowed to sacrifice the properties of the copolymerized polyester resin to some extent, the content of phosphorus atom in the copolymerized polyester resin may be 19 to 125 ppm.

The thermal stability is preferred to be 0.7 or less, more preferred to be 0.6 or less, and the most preferred to be 0.5 or less.

Further, as mentioned above, the ratio of the phosphorus compound to the aluminum compound is also important in the present invention. To be more specific, in the present invention, it is preferred that the molar ratio of the phosphorus atom to the aluminum atom (ratio of P/Al) in the polyester resin is more than 0 and not more than **2.6.** More preferably, it is 0.2 to 2.4 and further preferably, it is 0.4 **to 2.3.** When the aluminum compound is solely used as the polymerization catalyst, its catalytic activity cannot be sufficiently exhibited. On the contrary, when the phosphorus compound is used together with the aluminum compound as the polymerization catalyst in the specific ratio, it is now possible to sufficiently enhance the catalytic activity. When the molar ratio of the phosphorus atom to the aluminum atom in the polyester resin is out of the above range, the function as the polymerization catalyst may not be sufficiently achieved.

In the present invention, a metal-containing polycondensation catalyst such as a titanium compound, a tin compound and a germanium compound may also be used in addition to the above aluminum compound and phosphorus compound so as to further enhance the catalytic activity, within such an extent that the effect of the present invention is not deteriorated thereby. In that case, an amount of the germanium compound is preferred to be 10 ppm or less in terms of germanium atom to the mass of the resulting polyester resin. An amount of the titanium compound is preferred to be 3 ppm or less in terms of titanium atom to the mass of the resulting polyester resin. An amount of the tin compound is preferred to be 3 ppm or less in terms of tin atom to the mass of the resulting polyester resin. However, in view of the object of the present invention, it is preferable that those metal-containing polycondensation catalysts such as titanium compound, tin compound and germanium compound are not used as much as possible. In addition, an antimony compound which is commonly used as the polymerization catalyst is inferior in the enhancing effect for the thermal stability and thermal-oxidation stability of the resin as mentioned above. Accordingly, the antimony compound may preferably not be used in the present invention.

In the production of the copolymerized polyester resin of the present invention, an alkali metal compound and/or an alkaline-earth metal compound may also be used for improving polymerization activity or for reducing the acetaldehyde (hereinafter, it is sometimes abbreviated as AA) content in the produced copolymerized polyester resin so as to improve flavor properties. AA is a component that may be generated as a by-product during synthesis of the copolymerized polyester resin. Examples of the alkali metal compound and/or the alkaline-earth metal compound include compounds of lithium, sodium, potassium, rubidium, cesium, francium, calcium, strontium, barium, radium, beryllium, and magnesium. Among them, compounds of lithium, sodium, potassium, calcium, and magnesium are preferred, compounds of lithium, sodium, and potassium are more preferred, and compounds of lithium and potassium are the most preferred. Specific examples of the alkali metal compound and/or the alkaline-earth metal compound include carboxylic acid salts, such as acetic acid salts (e.g., lithium acetate), and alkoxides of these elements. They can be added to a reaction system in the form of, for example, powder, aqueous solution, or ethylene glycol solution. The amount of the alkali metal compound and/or the alkaline-earth metal compound to be used is such that the content of an alkali metal element and/or an alkaline-earth metal element (e.g., elemental lithium) in the copolymerized polyester resin is preferred to be 0.1 to 100 ppm, more preferred to be 0.1 to 60 ppm, and the most preferred to be 0.1 to 50 ppm. It should be noted that the content is a value obtained by eliminating the content of elemental sodium derived from sodium sulfoisophthalate contained as a dicarboxylic acid component in the copolymerized polyester resin of the present invention. If the content of an alkali metal element and/or an alkaline-earth metal element in the copolymerized polyester resin exceeds 100 ppm, thermal stability tends to reduce. On the other hand, the content of AA in the polyester resin is preferred to be 150 ppm or less, more preferred to be 120 ppm or less, further preferred to be 110 ppm or less, and the most preferred to be 80 ppm or less. If the content of AA exceeds 150 ppm, flavor properties tend to reduce.

In the case of the direct esterification method, the polycondensation catalyst may be added before the initiation of

the esterification reaction or at any time between after the completion of pressurized esterification reaction and before the start of the initial polycondensation reaction. However, when the antimony compound or the titanium compound is used as the polycondensation catalyst, it is preferred to add such compound before the esterification reaction. Preferably, other polycondensation catalyst, heat-stabilizer and additive are added after the esterification reaction.

In the case of the transesterification method, the polycondensation catalyst may be added at any time between before the start of transesterification reaction and before the start of the initial polycondensation reaction. However, since the titanium compound has a function of not only as the polycondensation catalyst but also as a transesterification catalyst, it is preferred to add the titanium compound before initiation of the transesterification reaction. Preferably, other polycondensation catalyst, heat-stabilizer and additive are added after completion of the transesterification reaction. As to the transesterification catalyst, manganese acetate, magnesium acetate, a titanium compound such as titanium tetrabutoxide, etc. are suitable. The transesterification catalyst needs to be added before initiation of the transesterification reaction.

When a catalyst other than the above aluminum compound is used, a phosphorus compound may be used as a stabilizer. As to the phosphorus compound, there may be exemplified phosphoric acid, phosphorous acid, phosphonic acid and derivatives thereof. As to suitable specific examples thereof, there may be listed phosphoric acid, trimethyl phosphate, tributyl phosphate, triphenyl phosphate, monomethyl phosphate, dimethyl phosphate, monobutyl phosphate, dibutyl phosphate, phosphorous acid, trimethyl phosphite, tributyl phosphite, methylphosphonic acid, dimethyl methylphosphonate, dimethyl ethylphosphonate, dimethyl phenylphosphonate, diethyl phenylphosphonate and diphenyl phenylphosphonate. Among them, trimethyl phosphate and phosphoric acid are particularly preferred. A content of the phosphorus compound is preferred to be 1 to 100 ppm to the produced copolymerized polyester resin. It is further preferred to be 3 to 70 ppm and particularly preferred to be 5 to 50 ppm.

For improving the color tone of the copolymerized polyester resin, a cobalt compound may be compounded therewith. As a result of addition of such cobalt compound, the color b value can be particularly made small. A content of the cobalt compound in terms of the cobalt atom is preferably 0.5 to 30 ppm, more preferably 1 to 20 ppm, and particularly preferably 1 to 15 ppm to the copolymerized polyester resin. When the content of cobalt atom exceeds the above range, the copolymerized polyester resin darkens or becomes strongly bluish as a result of reduction of cobalt metal. To be more specific, the color L value becomes less than 50 or the color b value becomes less than -5 whereby the commercial value lowers. As to the cobalt compound, there are exemplified cobalt acetate, cobalt chloride, cobalt benzoate and cobalt chromate. Among them, cobalt acetate is preferred.

The copolymerized polyester resin prepared by the above continuous polycondensation method or batch polycondensation method is usually drawn out in a strand shape from a drawing-out hole formed at a bottom of the reactor, cooled with water, and then cut into chips or sheets.

The copolymerized polyester resin containing small amount of free TS2E3 and L-T2SE4, which is an essential feature of the present invention, can be prepared by conducting the transesterification and the esterification at the same time, or by additionally adding the specific glycol component during the esterification reaction or the transesterification reaction or after the reaction, and then conducting the polycondensation reaction. Among them, the latter method (i.e. additionally adding the specific glycol component during the esterification reaction or the transesterification reaction or after the reaction, and then conducting the polycondensation reaction) is preferable. The specific glycol component is preferred to be diethylene glycol or ethylene glycol, and more preferred to be diethylene glycol.

For example, material monomers in an amount determined by taking the additionally added amount into consideration are firstly subjected to the esterification reaction or the transesterification reaction. After the reaction, diethylene glycol is added, and the mixture is stirred for more than 5 minutes. After the stirring, the polycondensation is conducted. The additionally added diethylene glycol component is preferred to be 7.5 to 30% by mole of the total diethylene glycol components.

Alternatively, material monomers in an amount determined by taking the additionally added amount into consideration are firstly subjected to the esterification reaction or the transesterification reaction. During the reaction, diethylene glycol is added. Then, after the reaction, diethylene glycol is additionally added, and the mixture is stirred for more than 5 minutes. After the stirring, the polycondensation is conducted. The additionally added diethylene glycol component is preferred to be 5 to 20% by mole of the total diethylene glycol components.

Alternatively, material monomers in an amount determined by taking the additionally added amount into consideration are firstly subjected to the esterification reaction or the transesterification reaction. During the reaction, diethylene glycol is added. Then, after the reaction, diethylene glycol is additionally added, and the mixture is stirred for more than 5 minutes. After the stirring, the polycondensation is conducted. The additionally added glycol (diethylene glycol + ethylene glycol) component is preferred to be 7.5 to 30% by mole of the total glycol (diethylene glycol + ethylene glycol) components.

Further, by pulling out the copolymerized polyester resin in a strand form, cooling with water, and cutting into chips or sheets, and by contacting the resulting chips or sheets with vapour of diethylene glycol or triethylene glycol for a certain time, it is also possible to reduce the content of TS2E3. Although detailed mechanism thereof is not known, the cyclic

TS2E3 is ring-opened by the vapour of diethylene glycol or triethylene glycol.

The polyester resin composition of the present invention may contain various additives, if necessary, as far as they do not impair the characteristics of the present invention. Examples of the additives include coloring agents such as pigments, toners, heat stabilizers, antioxidants, ultraviolet absorbers, light stabilizers, plasticizers, modifying agents, antistatic agents, flame retarders, and dyes. Titanium oxide and toners are preferred for improving colorability of the polyester resin composition. The amount of titanium oxide to be added is suitably 0 to 20000 ppm, preferred to be 0.1 to 15000 ppm, and more preferred to be 0.2 to 13000 ppm. The amount of toner to be added is suitably 0.1 to 100 ppm, preferred to be 0.5 to 90 ppm, and the most preferred to be 1 to 80 ppm. The toner may be a phthalocyanine-based toner or a stilbenebisbenzoxazole derivative. Specific examples thereof include SOLVAPERM BLUE RLS, PV fast BLUE A4R, and HOSTALUX KS manufactured by Clariant and OB-1 manufactured by Eastman Kodak Company. Among them, Solvent Blue Series manufactured by Clariant are particularly preferred, because they start to melt at 250°C or higher and are completely melted at about 300°C. Such a toner has the same melting point as the polyester itself (230 to 265°C), and is therefore well mixed with and dissolved in the polyester and has excellent melt uniformity in a melting machine, which improves spinning operability.

## Examples

The present invention will now be more specifically illustrated by way of Examples and Comparative Examples although the present invention is never limited to the embodiments of such Examples but may be appropriately modified within a scope of the gist of the present invention. Incidentally, evaluations of each characteristic property data were done in accordance with the following methods.

(1) Composition ratio of the copolymerized polyester resin

A sample of the copolymerized polyester resin (about 5 mg) was dissolved in 0.7 ml of a mixed solution of chloroform-d and trifluoroacetic acid (ratio by volume: 9/1). Composition ratio was determined using $^1$H-NMR (UNITY 50 manufactured by Varian) .

(2) Content of TS2E3

A copolymerized polyester resin (50 mg) was dissolved in 1 mL of a mixed liquid of hexafluoroisopropanol/chloroform (ratio by volume = 1/9) followed by further diluting by addition of 4 mL of chloroform. Then, 10 mL of methanol was added thereto so as to precipitate the polymer. After that, centrifugal separation was conducted. A supernatant liquid after the centrifugal separation was concentrated and evaporated to dryness followed by re-dissolving in 0.4 mL of dimethylformamide so as to prepare a solution. This solution was used to determine the content of TS2E3 by high-performance liquid chromatography.

Apparatus: Waters ACQUITY UPLC
Column: Waters BEH-C18 2.1 × 150 mm (manufactured by Waters)

(3) Content of L-T2SE4

Content of L-T2SE4 was measured by high-performance liquid chromatography in the same method as for the above measurement of the TS2E3 content.

(4) Intrinsic viscosity (IV)

A sample (0.1 g) being dried at 60°C for 24 hours was precisely weighed and dissolved in a mixed solvent of 25 mL of phenol/tetrachloroethane (in a ratio of 3/2 by mass). Its intrinsic viscosity (IV) was measured at 30°C using an Ostwald viscometer.

(5) Number-average molecular weight

Number-average molecular weight was measured by Waters gel permeation chromatography using a mixed solvent of chloroform/hexafluoroisopropanol (ratio by volume = 9/1) as a solvent and polystyrene as a calibration reference. The measured value converted in terms of polystyrene was obtained using a mixed solvent of chloroform/hexafluoroisopropanol (ratio by volume = 9/1) as an eluting solution.

(6) Carboxyl end group concentration (AV)

A sample dried at 60°C for 24 hours was precisely weighed in an amount of 0.2 g. The weight at that time was defined as W (g). The weighed sample and 10 ml of benzyl alcohol were added to a test tube. The test tube was placed in an oil bath heated to 205°C so as to dissolve the sample by stirring with a glass rod. The thus obtained samples of a dissolution time of 3 minutes, a dissolution time of 5 minutes, and a dissolution time of 7 minutes were respectively defined as A, B, and C. Then, a new test tube was prepared, and only benzyl alcohol was added thereto and treated in the same manner. The thus obtained samples of a dissolution time of 3 minutes, a dissolution time of 5 minutes, and a dissolution time of 7 minutes were respectively defined as a, b, and c. Each of the samples was titrated using a 0.04 mol/l potassium hydroxide solution (ethanol solution) having a known factor. Phenol red was used as an indicator. The point at which the color of the indicator was changed from yellow green to pink was determined as an endpoint so as to determine the volume (ml) of the potassium hydroxide solution required for titration. The volumes of the potassium hydroxide solution required to titrate the samples A, B, and C were respectively defined as XA, XB, and XC (ml). The volumes of the potassium hydroxide solution required to titrate the samples a, b, and c were respectively defined as Xa, Xb, and Xc (ml). The volume V (ml) of the potassium hydroxide solution required for titration at a dissolution time of 0 minutes was determined by the least-square method using the volumes of the potassium hydroxide solution required for titration XA, XB, and XC at respective dissolution times. In the same manner, Xa, Xb, and Xc were used to determine the volume V0 (ml) of the potassium hydroxide solution required for titration. Then, AV was determined according to the following formulae 5.

$$AV\ (eq/t) = [(V-V0) \times NF \times 1000]/W \quad \text{(formulae 5)}$$

NF: Factor of the 0.04 mol/l potassium hydroxide solution
W: Sample weight (g)

(7) Color tone (color b value and color L value)

Color of chips of the copolymerized polyester resin was measured using a colorimeter (Model 1001DP manufactured by Nippon Denshoku) so as to determine the color b value and the color L value.

(8) Melting point

Measurement was performed using a differential calorimeter (DSC) (TAS 100 thermal analysis system) manufactured by TA Instruments. A polyester resin sample of 7.5 ± 0.3 mg was placed in an aluminum pan, heated to 280°C using a melting-point measuring instrument and kept at 280°C for 1 minute, and then rapidly cooled with liquid nitrogen. Then, the sample was heated from room temperature to 300°C at a temperature rise rate of 20°C/min so as to measure a melting point (Tm). The maximum temperature of each peak was defined as Tm.

(9) Glass transition point (Tg)

A sample of 5 mg was heated from -40°C to 120°C using a differential scanning calorimeter (type: DSC 220) manufactured by Seiko Instruments Inc. at a temperature rise rate of 10°C/min. A glass transition point was determined from an obtained endothermic curve. The temperature at an intersection between an extended baseline at or lower than a glass transition temperature and a tangent line having a maximum slope in a transition part was defined as a glass transition temperature (Tg) .

(10) Aluminum atom content

A sample of 0.1 g was dissolved in a 6M hydrochloric acid solution, and the solution was left to stand for one day. Then, the solution was diluted with pure water so as to obtain a 1.2 M hydrochloric acid solution for measurement. The aluminum atom content in the prepared solution sample was determined by high-frequency plasma emission spectrometry.

(11) Phosphorus atom content

A phosphorus compound was converted to orthophosphoric acid by dry ashing decomposition of 1 g of a sample in the presence of sodium carbonate or by wet decomposition of 1 g of a sample in a mixed solution of sulfuric acid/nitric acid/perchloric acid or a mixed solution of sulfuric acid/hydrogen peroxide solution. Then, the orthophosphoric acid was

reacted with a molybdate in a 1 mol/L sulfuric acid solution so as to obtain phosphomolybdic acid. Then, the phosphomolybdic acid was reduced with hydrazine sulfate so as to generate heteropoly blue. The absorbance at a wavelength of 830 nm was measured by an absorptiometer (UV-150-02 manufactured by SHIMADZU CORPORATION). The phosphorus atom content in the sample was determined from a calibration curve previously prepared.

(12) Titanium atom content

A sample was precisely measured in an amount of 1 g in a platinum crucible and carbonized/incinerated in an electric furnace. The residue was melted with potassium hydrogen sulfate. The melt was then dissolved in dilute hydrochloric acid. A tetrabutyl titanate (it is sometimes abbreviated as TBT) content was measured by a colorimetric method using diantipyrylmethane. The content was expressed in ppm in terms of titanium atoms.

(13) Antimony atom content

A sample of 1 g was wet-decomposed with a mixed solution of sulfuric acid/hydrogen peroxide solution. Then, sodium nitrite was added so as to convert antimony atoms to $Sb^{5+}$. Then, brilliant green was added so as to generate a blue complex with antimony. This complex was extracted with toluene, and then the absorbance at a wavelength of 625 nm was measured using an absorptiometer (UV-150-02 manufactured by SHIMADZU CORPORATION). The antimony atom content in the sample was colorimetrically determined from a calibration curve previously prepared.

(14) Cobalt atom content

A sample of 1 g was decomposed by ashing in a platinum crucible, 6 mol/L hydrochloric acid was added, and the resultant was evaporated to dryness. The resultant was dissolved in 1.2 mol/L hydrochloric acid. Then, emission intensity was measured with an ICP emission spectrometer (ICPS-2000 manufactured by SHIMADZU CORPORATION). The cobalt atom content in the sample was determined from a calibration curve previously prepared.

(15) Lithium atom content

A sample was weighed in an amount of 1 g in a platinum crucible and was subjected to preliminary carbonization on a hot plate up to 400°C. Then, the resultant was subjected to ashing treatment at 550°C for 8 hours using an electric furnace FO610 manufactured by Yamato Scientific Co., Ltd. After the ashing, small amounts of 6.0 N hydrochloric acid and hydrofluoric acid were added, and acid decomposition was performed on a hot plate, and heat treatment was performed until the acids were completely vaporized. After the completion of the acid decomposition, a measurement liquid was prepared by filling up to 20 mL with 1.2 N hydrochloric acid. The elemental lithium concentration in the measurement liquid was measured by a high-frequency inductively-coupled plasma emission spectrometer (SPECTROBLUE manufactured by Hitachi Hi-Tech Corporation), and the elemental lithium content in the sample was calculated.

(16) Die contamination and foreign matter adhesion

A dried copolymerized polyester resin sample was placed into an extruder equipped with die for sheet, and sheets of about 0.5 mm thickness were continuously molded for two days. A state of adhesion of contaminating material on the die outlet and a state of the foreign matter adhered on the sheet surface were evaluated by naked eyes according to the following criteria.

(Evaluation criteria)

◦◦: Almost no contaminating material was adhered on the die outlet and the surface state of the sheet was good.
◦: Although the contaminating material was very slightly adhered on the die outlet, the surface state of the sheet was good.
Δ: The contaminating material was slightly adhered on the die outlet and foreign matter was slightly adhered on the sheet surface.
×: The contaminating material was significantly adhered on the die outlet and the foreign matter was significantly adhered on the sheet surface.

(17) Haze value

The copolymerized polyester resin was melted at 280°C using an injection molding device (M-150C-DM manufactured by Meiki Seisakusho) and molded into a corrugated molded plate having a thickness of 2 to 11 mm at a mold temperature of 10°C. Haze value (%) was measured on an area of the corrugated molded plate having a thickness of 3 mm by a haze-meter (Model NDH2000 manufactured by Nippon Denshoku).

(18) DSC

A sample was allowed to stand in a Yamato DP63 drier at 120°C for 120 minutes. Then, this sample was heated at a rate of 20°C/min from -100°C to 300°C, then cooled at a rate of 50°C/min down to -100°C, and then heated at a rate of 20°C/min from -100°C to 300°C, using a differential scanning calorimeter (DSC). It was checked whether there were melting peaks during the two heating processes. When there was no melting peak in any of the two heating processes, the sample was judged as "o". When there was a melting peak in at least one of the processes, the sample was judged as "×".

(19) Evaluation of thermal stability: Parameter of thermal-oxidative decomposition (TD)

The intrinsic viscosity (IV) of the copolymerized polyester resin was measured and set as IV before the heat test ($[IV]_i$). On the other hand, dried chips (3 g) of the copolymerized polyester resin were placed in a test tube made of glass, and melted by being immersed in an oil bath of 280°C for 120 minutes under a nitrogen atmosphere, and then IV after heating $[IV]_{f1}$ was measured. TD was determined according to the following formulae from $[IV]_i$ and $[IV]_{r1}$.

$$TD = 0.245\{[IV]_{f1}^{-1.47} - [IV]_i^{-1.47}\}$$

When the value of the parameter of thermal-oxidative decomposition (TD) of the copolymerized polyester is small, the thermal stability is high.

(20) Acetaldehyde (AA) content in polyester resin

Sample/distilled water = 1 g/2 cc was placed in a glass ampule purged with nitrogen. Then, the top of the ampule was sealed by melting. Then, extraction treatment was performed at 160°C for 2 hours. After cooling, the acetaldehyde content in the extraction liquid was measured by high-sensitive gas chromatography, and the concentration was expressed in ppm. The evaluation of flavor properties was performed according to the following criteria.

◦◦: The acetaldehyde content was 80 ppm or less.
◦: The acetaldehyde content was more than 80 ppm and 120 ppm or less.
Δ to ◦: The acetaldehyde content was more than 120 ppm and less than 160 ppm.
×: The acetaldehyde content was 160 ppm or more.

(Example 1)

A slurry containing high-purity terephthalic acid (TPA), succinic acid (corresponding to aliphatic acid having 4 carbon atoms), and dimethyl sodium sulfoisophthalate (GCM) as dicarboxylic acid components and ethylene glycol (EG) and diethylene glycol (DEG) as glycol components was prepared so that a resin composition shown in Table 1 is achieved. However, the molar ratio (G/A) of all the glycol components to the dicarboxylic acid components in the slurry was adjusted to 2.2. Then, the slurry was continuously supplied to a first esterification reaction tank in which a reaction product remained. Then, esterification reaction was performed with stirring under conditions of a pressure in the tank of 0.15 MPa and 257°C in such a manner that an average residence time was 3 hours. The obtained reaction product was transferred to a second esterification reaction tank, and esterification reaction was performed with stirring under conditions of a tank pressure of 0.05 MPa and 257°C in such a manner that an average residence time was 1 hour. Then, the obtained reaction product was transferred to a third esterification reaction tank, and esterification reaction was performed with stirring under conditions of a tank pressure of 0.05 MPa and 257°C.

To the generated oligomers, diethylene glycol was added in an amount corresponding to 20% of the amount of diethylene glycol added before the esterification reaction so that the target composition was achieved, and the resultant was stirred for 15 minutes so as to perform reaction.

To this esterification reaction product, certain amounts of an ethylene glycol solution of an aluminum compound (basic aluminum acetate) and an ethylene glycol solution of a phosphorus compound (Irganox 1222: the above-described compound of the chemical formula (4)) were added as polymerization catalysts. Then, the resultant was continuously

supplied to a first polycondensation reaction tank and subjected to polycondensation reaction with stirring at 261°C and 6.7 kPa for 1 hour, then subjected to polycondensation reaction in a second polycondensation reaction tank with stirring at 272°C and 0.6 kPa for 1 hour, and then further subjected to polycondensation reaction in a final polycondensation reaction tank with stirring at 275°C and 0.10 to 0.20 kPa for 1 hour. After the polycondensation reaction, the reaction product was passed through a polymer filter. Then, the copolymerized polyester resin in a melt state was extruded through the nozzle of a die in a strand form. The strand was water-cooled in a cooling bath and then cut into chips. The evaluation results of the obtained copolymerized polyester resin are shown in Table 1.

(Examples 2 to 4)

Examples 2 to 4 are each a case where the amount of sodium sulfoisophthalate (GCM) is changed. Specifically, a copolymerized polyester resin was obtained in the same manner as in Example 1 except that the blending ratio between terephthalic acid, sulfoisophthalic acid, ethylene glycol, and diethylene glycol was changed so that a resin composition shown in Table 1 is achieved. The evaluation results of the obtained copolymerized polyester resin are shown in Table 1.

(Examples 5 and 6)

Examples 5 and 6 are each a case where the amount of diethylene glycol (DEG) is changed. Specifically, a copolymerized polyester resin was obtained in the same manner as in Example 1 except that the blending ratio between terephthalic acid, sulfoisophthalic acid, ethylene glycol, and diethylene glycol was changed so that a resin composition shown in Table 1 is achieved. The evaluation results of the obtained copolymerized polyester resin are shown in Table 1.

(Examples 7 to 9)

Examples 7 to 9 are each a case where the number average molecular weight and/or the carboxyl end group concentration (AV) are/is changed. Specifically, a copolymerized polyester resin was obtained in the same manner as in Example 1 except that the reaction condition (the average residence time in the esterification reaction) was adjusted so as to achieve a number average molecular weight and/or a carboxyl end group concentration (AV) shown in Table 1. The evaluation results of the obtained copolymerized polyester resin are shown in Table 1.

(Examples 10 and 12)

Examples 10 to 12 are each a case where the amount of the aluminum compound and/or the amount of the phosphorus compound as polymerization catalysts are/is changed. Specifically, a copolymerized polyester resin was obtained in the same manner as in Example 1 except that the amount of the aluminum compound added and/or the amount of the phosphorus compound added were/was adjusted so that the amount of remaining aluminum atoms and/or the amount of remaining phosphorus atoms were/was changed as shown in Table 1. The evaluation results of the obtained copolymerized polyester resin are shown in Table 1.

(Examples 13 and 14)

Examples 13 and 14 are each a case where lithium acetate is further added to the slurry for reducing the acetaldehyde content in the polymer so as to improve flavor properties. Specifically, a slurry containing high-purity terephthalic acid (TPA) and dimethyl sodium sulfoisophthalate (GCM) as dicarboxylic acid components, ethylene glycol (EG) and diethylene glycol (DEG) as glycol components, as well as lithium acetate was prepared so that a resin composition shown in Table 1 is achieved. However, the molar ratio (G/A) of all the glycol components to the dicarboxylic acid components in the slurry was adjusted to 2.2. Then, the slurry was continuously supplied to a first esterification reaction tank in which a reaction product remained. Then, esterification reaction was performed with stirring under conditions of a pressure in the tank of 0.15 MPa and 257°C in such a manner that an average residence time was 3 hours. The obtained reaction product was transferred to a second esterification reaction tank, and esterification reaction was performed with stirring under conditions of a tank pressure of 0.05 MPa and 257°C in such a manner that an average residence time was 1 hour. Then, the obtained reaction product was transferred to a third esterification reaction tank, and esterification reaction was performed with stirring under conditions of a tank pressure of 0.05 MPa and 257°C.

To the generated oligomers, diethylene glycol was added in an amount corresponding to 20% of the amount of diethylene glycol added before the esterification reaction so that the target composition was achieved, and the resultant was stirred for 15 minutes so as to perform reaction.

To this esterification reaction product, certain amounts of an ethylene glycol solution of an aluminum compound (basic aluminum acetate) and an ethylene glycol solution of a phosphorus compound (Irganox 1222: the above-described

compound of the chemical formula (4)) were added as polymerization catalysts. Then, the resultant was continuously supplied to a first polycondensation reaction tank and subjected to polycondensation reaction with stirring at 261°C and 6.7 kPa for 1 hour, then subjected to polycondensation reaction in a second polycondensation reaction tank with stirring at 272°C and 0.6 kPa for 1 hour, and then further subjected to polycondensation reaction in a final polycondensation reaction tank with stirring at 275°C and 0.10 to 0.20 kPa for 1 hour. After the polycondensation reaction, the reaction product was passed through a polymer filter. Then, the copolymerized polyester resin in a melt state was extruded through the nozzle of a die in a strand form. The strand was water-cooled in a cooling bath and then cut into chips. The evaluation results of the obtained copolymerized polyester resin are shown in Table 1.

(Example 15)

Example 15 is a case where an antimony compound and a cobalt compound are used as polymerization catalysts instead of the aluminum compound. Specifically, a slurry containing high-purity terephthalic acid (TPA) and dimethyl sodium sulfoisophthalate (GCM) as dicarboxylic acid components and ethylene glycol (EG) and diethylene glycol (DEG) as glycol components was prepared so that a resin composition shown in Table 1 is achieved. However, the molar ratio (G/A) of all the glycol components to the dicarboxylic acid components in the slurry was adjusted to 2.2. Then, the slurry was continuously supplied to a first esterification reaction tank in which a reaction product remained. Then, esterification reaction was performed with stirring under conditions of a pressure in the tank of 0.15 MPa and 257°C in such a manner that an average residence time was 3 hours. The obtained reaction product was transferred to a second esterification reaction tank, and esterification reaction was performed with stirring under conditions of a tank pressure of 0.05 MPa and 257°C in such a manner that an average residence time was 1 hour. Then, the obtained reaction product was transferred to a third esterification reaction tank, and esterification reaction was performed with stirring under conditions of a tank pressure of 0.05 MPa and 257°C.

To the generated oligomers, diethylene glycol was added in an amount corresponding to 20% of the amount of diethylene glycol added before the esterification reaction so that the target composition was achieved, and the resultant was stirred for 15 minutes so as to perform reaction.

To this esterification reaction product, certain amounts of an ethylene glycol solution of an antimony compound (antimony trioxide), an ethylene glycol solution of a cobalt compound (cobalt acetate) and an ethylene glycol solution of a phosphorus compound (Irganox 1222: the above-described compound of the chemical formula (4)) were added as polymerization catalysts. Then, the resultant was continuously supplied to a first polycondensation reaction tank and subjected to polycondensation reaction with stirring at 261°C and 6.7 kPa for 1 hour, then subjected to polycondensation reaction in a second polycondensation reaction tank with stirring at 272°C and 0.6 kPa for 1 hour, and then further subjected to polycondensation reaction in a final polycondensation reaction tank with stirring at 275°C and 0.10 to 0.20 kPa for 1 hour. After the polycondensation reaction, the reaction product was passed through a polymer filter. Then, the copolymerized polyester resin in a melt state was extruded through the nozzle of a die in a strand form. The strand was water-cooled in a cooling bath and then cut into chips. The evaluation results of the obtained copolymerized polyester resin are shown in Table 1.

(Examples 16 and 17)

Examples 16 and 17 are each a case where a titanium compound is used as a polymerization catalyst instead of the aluminum compound. Specifically, a slurry containing high-purity terephthalic acid (TPA) and dimethyl sodium sulfoisophthalate (GCM) as dicarboxylic acid components, ethylene glycol (EG) and diethylene glycol (DEG) as glycol components, as well aslithium acetate was prepared so that a resin composition shown in Table 1 is achieved. However, the molar ratio (G/A) of all the glycol components to the dicarboxylic acid components in the slurry was adjusted to 2.2. Then, the slurry was continuously supplied to a first esterification reaction tank in which a reaction product remained. Then, esterification reaction was performed with stirring under conditions of a pressure in the tank of 0.15 MPa and 257°C in such a manner that an average residence time was 3 hours. The obtained reaction product was transferred to a second esterification reaction tank, and esterification reaction was performed with stirring under conditions of a tank pressure of 0.05 MPa and 257°C in such a manner that an average residence time was 1 hour. Then, the obtained reaction product was transferred to a third esterification reaction tank, and esterification reaction was performed with stirring under conditions of a tank pressure of 0.05 MPa and 257°C.

To the generated oligomers, diethylene glycol was added in an amount corresponding to 20% of the amount of diethylene glycol added before the esterification reaction so that the target composition was achieved, and the resultant was stirred for 15 minutes so as to perform reaction.

To this esterification reaction product, certain amounts of an 1-butanol solution of tetrabutyl titanate (TBT) and an ethylene glycol solution of a phosphorus compound (Irganox 1222: the above-described compound of the chemical formula (4)) were added as polymerization catalysts. Then, the resultant was continuously supplied to a first polycondensation reaction tank and subjected to polycondensation reaction with stirring at 261°C and 6.7 kPa for 1 hour, then subjected to polycondensation reaction in a second polycondensation reaction tank with stirring at 272°C and 0.6 kPa for 1 hour, and then further subjected to polycondensation reaction in a final polycondensation reaction tank with stirring at 275°C and 0.10 to 0.20 kPa for 1 hour. After the polycondensation reaction, the reaction product was passed through a polymer filter. Then, the copolymerized polyester resin in a melt state was extruded through the nozzle of a die in a strand form. The strand was water-cooled in a cooling bath and then cut into chips. The evaluation results of the obtained copolymerized polyester resin are shown in Table 1.

(Examples 18 and 19)

Examples 18 and 19 are each a case where titanium oxide is further added for improving colorability. Specifically, a copolymerized polyester resin was obtained in the same manner as in Example 1 except that the blending ratio between terephthalic acid, sulfoisophthalic acid, ethylene glycol, and diethylene glycol, the types and amounts of polymerization catalysts used, the carboxyl end group concentration (AV), or the number average molecular weight was/were changed as shown in Table 1 and that lithium acetate was further added to the slurry and titanium oxide CR930 (manufactured by ISHIHARA SANGYO KAISHA, LTD.) was added at 0.5 ppm (Example 18) or 12000 ppm (Example 19) relative to the polyester resin at the same time with the addition of the polymerization catalysts. The evaluation results of the obtained copolymerized polyester resin are shown in Table 1.

(Examples 20 and 21)

Examples 20 and 21 are each a case where toner is further added for improving colorability. Specifically, a copolymerized polyester resin was obtained in the same manner as in Example 1 except that the blending ratio between terephthalic acid, sulfoisophthalic acid, ethylene glycol, and diethylene glycol, the types and amounts of polymerization catalysts used, the carboxyl end group concentration (AV), or the number average molecular weight was/were changed as shown in Table 1 and that Solvent Blue 45 (manufactured by Clariant) was added as the toner at 0.1 ppm (Example 20) or 50 ppm (Example 21) relative to the polyester resin at the same time with the addition of the polymerization catalysts. The evaluation results of the obtained copolymerized polyester resin are shown in Table 1.

(Examples 22 and 23)

Examples 22 and 23 are each a case where the type of aliphatic acid having 2 to 4 carbon atoms is changed. Specifically, a copolymerized polyester resin was obtained in the same manner as in Example 1 except that succinic acid (corresponding to aliphatic acid having 4 carbon atoms) was changed to oxalic acid (corresponding to aliphatic acid having 2 carbon atoms) (Example 22) or malonic acid (corresponding to aliphatic acid having 3 carbon atoms) (Example 23). The evaluation results of the obtained copolymerized polyester resin are shown in Table 1.

(Examples 24 and 25)

Examples 24 and 25 are each a case where the amount of aliphatic acid having 2 to 4 carbon atoms is changed. Specifically, a copolymerized polyester resin was obtained in the same manner as in Example 1 except that the blending ratio between terephthalic acid, succinic acid (corresponding to aliphatic acid having 4 carbon atoms), sulfoisophthalic acid, ethylene glycol, and diethylene glycol was changed so that a resin composition shown in Table 1 is achieved. The evaluation results of the obtained copolymerized polyester resin are shown in Table 1.

(Comparative Example 1)

Comparative Example 1 is a case where only terephthalic acid is used as a dicarboxylic acid component without using sodium sulfoisophthalate (GCM). Specifically, a copolymerized polyester resin was obtained in the same manner as in Example 1 except that the blending ratio between terephthalic acid, ethylene glycol, and diethylene glycol was changed so that a resin composition shown in Table 1 is achieved. The evaluation results of the obtained copolymerized polyester resin are shown in Table 1. It should be noted that the amount of TS2E3 and the amount of L-T2SE4 were not measured in Comparative Example 1. This is because GCM was not used in the Comparative Example 1.

(Comparative Example 2)

Comparative Example 2 is a case where the amount of sodium sulfoisophthalate (GCM) is too small. Specifically, a copolymerized polyester resin was obtained in the same manner as in Example 1 except that the blending ratio between

terephthalic acid, sulfoisophthalic acid, ethylene glycol, and diethylene glycol was changed so that a resin composition shown in Table 1 is achieved. The evaluation results of the obtained copolymerized polyester resin are shown in Table 1.

(Comparative Example 3)

Comparative Example 3 is a case where the amount of sodium sulfoisophthalate (GCM) is too large. Specifically, a copolymerized polyester resin was obtained in the same manner as in Example 1 except that the blending ratio between terephthalic acid, sulfoisophthalic acid, ethylene glycol, and diethylene glycol was changed so that a resin composition shown in Table 1 is achieved. The evaluation results of the obtained copolymerized polyester resin are shown in Table 1.

(Comparative Example 4)

Comparative Example 4 is a case where the amount of diethylene glycol (DEG) is too large. Specifically, a copolymerized polyester resin was obtained in the same manner as in Example 1 except that the blending ratio between terephthalic acid, sulfoisophthalic acid, ethylene glycol, and diethylene glycol was changed so that a resin composition shown in Table 1 is achieved. The evaluation results of the obtained copolymerized polyester resin are shown in Table 1.

[Table 1]

| Items | | | Example 1 | Example 2 | Example 3 | Example 4 | Example 5 | Example 6 |
|---|---|---|---|---|---|---|---|---|
| Compositions of resins (mol%) | | terephthalic acid | 89.50 | 80.50 | 89.92 | 85.20 | 89.50 | 89.50 |
| | | oxalic acid | - | - | - | - | - | - |
| | | malonic acid | - | - | - | - | - | - |
| | | succinic acid | 10 | 10 | 10 | 10 | 10 | 10 |
| | | sodium sulfoisophthalate | 0.50 | 9.50 | 0.08 | 4.80 | 0.50 | 0.50 |
| | | ethylene glycol | 98.00 | 97.70 | 98.00 | 98.00 | 94.10 | 90.20 |
| | | diethylene glycol | 2.00 | 2.30 | 2.00 | 2.00 | 5.90 | 9.80 |
| Contents of by-product oligomers (ppm) | | TS2E3 | 4 | 39 | 2 | 15 | 7 | 8 |
| | | L-T2SE4 | 21 | 58 | 12 | 32 | 15 | 12 |
| Physical properties of resins | | intrinsic viscosity (IV) (dl/g) | 0.69 | 0.67 | 0.67 | 0.67 | 0.70 | 0.70 |
| | | number-average molecular weight | 9000 | 6000 | 10000 | 10000 | 9000 | 9000 |
| | | carboxyl end group concentration (AV) (eq/t) | 16 | 12 | 12 | 12 | 12 | 12 |
| | | color b value | 2.3 | 2.2 | 2.2 | 2.2 | 6.9 | 12.8 |
| | | color L value | 89.0 | 86.0 | 86.0 | 86.0 | 86.0 | 86.0 |
| | | melting point (°C) | 258 | 230 | 257 | 245 | 252 | 230 |
| | | Tg (°C) | 67 | 67 | 67 | 67 | 62 | 55 |
| Amount of remaining metal (ppm) | | aluminum | 30 | 30 | 30 | 30 | 35 | 35 |
| | | phosphorus | 77 | 77 | 77 | 77 | 90 | 90 |
| | | molar ratio of phosphorus atom to aluminum atom | 2.2 | 2.2 | 2.2 | 2.2 | 2.2 | 2.2 |
| | | titanium | - | - | - | - | - | - |
| | | antimony | - | - | - | - | - | - |
| | | cobalt | - | - | - | - | - | - |
| | | lithium | - | - | - | - | - | - |
| titanium oxide (ppm) | | | - | - | - | - | - | - |
| toner (ppm) | | | - | - | - | - | - | - |
| Property evaluation | die contamination and foreign matter adhesion | | oo | o | oo | o | oo | oo |
| | Transparency | haze value (%) | 4.3 | 3.0 | 5.4 | 5.0 | 2.0 | 1.5 |
| | | DSC measurement | o | o | o | o | o | o |
| | Recyclability | thermal stability (TD) | 0.02 | 0.03 | 0.02 | 0.02 | 0.20 | 0.40 |
| | content of AA (ppm) | | 90 | 110 | 90 | 100 | 100 | 100 |
| | flavor properties | | o | o | o | o | o | o |

| Items | | Example 7 | Example 8 | Example 9 | Example 10 | Example 11 | Example 12 |
|---|---|---|---|---|---|---|---|
| Compositions of resins (mol%) | terephthalic acid | 89.50 | 89.50 | 89.50 | 89.50 | 89.50 | 89.50 |
| | oxalic acid | - | - | - | - | - | - |
| | malonic acid | - | - | - | - | - | - |
| | succinic acid | 10 | 10 | 10 | 10 | 10 | 10 |
| | sodium sulfoisophthalate | 0.50 | 0.50 | 0.50 | 0.50 | 0.50 | 0.50 |
| | ethylene glycol | 98.00 | 98.00 | 98.00 | 98.00 | 98.00 | 98.90 |
| | diethylene glycol | 2.00 | 2.00 | 2.00 | 2.00 | 2.00 | 1.10 |
| Contents of by-product oligomers (ppm) | TS2E3 | 9 | 3 | 2 | 2 | 2 | 3 |
| | L-T2SE4 | 25 | 20 | 15 | 17 | 16 | 17 |
| Physical properties of resins | intrinsic viscosity (IV) (dl/g) | 1.10 | 0.30 | 0.70 | 0.69 | 0.69 | 0.70 |
| | number-average molecular weight | 28000 | 3000 | 9000 | 9000 | 9000 | 9000 |
| | carboxyl end group concentration (AV) (eq/t) | 5 | 12 | 24 | 14 | 12 | 12 |
| | color b value | 2.1 | 2.5 | 2.8 | 3.0 | 2.3 | 2.1 |
| | color L value | 86.0 | 86.0 | 86.0 | 86.0 | 86.0 | 86.0 |
| | melting point (°C) | 258 | 258 | 256 | 257 | 257 | 259 |
| | Tg (°C) | 67 | 67 | 67 | 67 | 67 | 67 |
| Amount of remaining metal (ppm) | aluminum | 35 | 30 | 35 | 30 | 30 | 30 |
| | phosphorus | 90 | 77 | 90 | 90 | 65 | 100 |
| | molar ratio of phosphorus atom to aluminum atom | 2.2 | 2.2 | 2.2 | 2.6 | 1.9 | 2.9 |
| | titanium | - | - | - | - | - | - |
| | antimony | - | - | - | - | - | - |
| | cobalt | - | - | - | - | - | - |
| | lithium | - | - | - | - | - | - |
| titanium oxide (ppm) | | - | - | - | - | - | - |
| toner (ppm) | | - | - | - | - | - | - |
| Property evaluation | die contamination and foreign matter adhesion | o | oo | oo | oo | oo | oo |
| | Transparency: haze value (%) | 0.5 | 9.0 | 5.0 | 4.3 | 4.0 | 4.8 |
| | Transparency: DSC measurement | o | Δ to o | o | o | o | o |
| | Recyclability: thermal stability (TD) | 0.01 | 0.02 | 0.65 | 0.02 | 0.02 | 0.01 |
| | content of AA (ppm) | 120 | 100 | 100 | 100 | 100 | 90 |
| | flavor properties | o | o | o | o | o | o |

| Items | | Example 13 | Example 14 | Example 15 | Example 16 | Example 17 | Example 18 |
|---|---|---|---|---|---|---|---|
| Compositions of resins (mol%) | terephthalic acid | 89.50 | 89.50 | 89.50 | 89.50 | 89.50 | 89.50 |
| | oxalic acid | - | - | - | - | - | - |
| | malonic acid | - | - | - | - | - | - |
| | succinic acid | 10 | 10 | 10 | 10 | 10 | 10 |
| | sodium sulfoisophthalate | 0.50 | 0.50 | 0.50 | 0.50 | 0.50 | 0.50 |
| | ethylene glycol | 98.00 | 98.00 | 98.00 | 98.00 | 98.00 | 98.00 |
| | diethylene glycol | 2.00 | 2.00 | 2.00 | 2.00 | 2.00 | 2.00 |
| Contents of by-product oligomers (ppm) | TS2E3 | 3 | 2 | 3 | 2 | 2 | 2 |
| | L-T2SE4 | 16 | 15 | 19 | 15 | 15 | 15 |
| Physical properties of resins | intrinsic viscosity (IV) (dl/g) | 0.69 | 0.70 | 0.69 | 0.70 | 0.70 | 0.70 |
| | number-average molecular weight | 9000 | 9000 | 9000 | 9000 | 9000 | 9000 |
| | carboxyl end group concentration (AV) (eq/t) | 12 | 14 | 12 | 12 | 12 | 14 |
| | color b value | 11.0 | 2.3 | 2.3 | 8.0 | 11.0 | 0.8 |
| | color L value | 86.0 | 86.0 | 60.0 | 89.0 | 89.0 | 86.0 |
| | melting point (°C) | 257 | 258 | 255 | 258 | 258 | 258 |
| | Tg (°C) | 67 | 67 | 67 | 67 | 67 | 67 |
| Amount of remaining metal (ppm) | aluminum | 30 | 30 | - | - | - | 30 |
| | phosphorus | 2 | 2 | 50 | 2 | 2 | 77 |
| | molar ratio of phosphorus atom to aluminum atom | 0.1 | 0.1 | - | - | - | 2.2 |
| | titanium | - | - | - | 10 | 50 | - |
| | antimony | - | - | 250 | - | - | - |
| | cobalt | - | - | 10 | - | - | - |
| | lithium | 15 | 50 | - | 15 | 15 | 6 |
| titanium oxide (ppm) | | - | - | - | - | - | 0.5 |
| toner (ppm) | | - | - | - | - | - | - |
| Property evaluation | die contamination and foreign matter adhesion | oo | oo | oo | oo | oo | oo |
| | Transparency: haze value (%) | 5.0 | 6.0 | 7.0 | 3.0 | 4.0 | 9.0 |
| | Transparency: DSC measurement | o | o | o | o | o | o |
| | Recyclability: thermal stability (TD) | 0.52 | 0.62 | 0.09 | 0.55 | 0.70 | 0.02 |
| | content of AA (ppm) | 70 | 70 | 110 | 70 | 120 | 70 |
| | flavor properties | oo | oo | o | oo | oo | oo |

| Items | | | Example 19 | Example 20 | Example 21 | Example 22 | Example 23 | Example 24 |
|---|---|---|---|---|---|---|---|---|
| Compositions of resins (mol%) | terephthalic acid | | 89.50 | 89.50 | 89.50 | 89.50 | 89.50 | 79.50 |
| | oxalic acid | | - | - | - | 10 | - | - |
| | malonic acid | | - | - | - | - | 10 | - |
| | succinic acid | | 10 | 10 | 10 | - | - | 20 |
| | sodium sulfoisophthalate | | 0.50 | 0.50 | 0.50 | 0.50 | 0.50 | 0.50 |
| | ethylene glycol | | 98.00 | 98.00 | 98.00 | 98.00 | 98.00 | 98.00 |
| | diethylene glycol | | 2.00 | 2.00 | 2.00 | 2.00 | 2.00 | 2.00 |
| Contents of by-product oligomers (ppm) | TS2E3 | | 2 | 1 | 3 | 4 | 4 | 4 |
| | L-T2SE4 | | 15 | 15 | 15 | 21 | 21 | 21 |
| Physical properties of resins | intrinsic viscosity (IV) (dl/g) | | 0.70 | 0.70 | 0.70 | 0.69 | 0.69 | 0.69 |
| | number-average molecular weight | | 9000 | 9000 | 9000 | 9000 | 9000 | 9000 |
| | carboxyl end group concentration (AV) (eq/t) | | 14 | 12 | 12 | 16 | 16 | 16 |
| | color b value | | 0.5 | 0.5 | -2.5 | 2.3 | 2.3 | 2.3 |
| | color L value | | 86.0 | 86.0 | 86.0 | 89.0 | 89.0 | 89.0 |
| | melting point (°C) | | 258 | 258 | 258 | 261 | 260 | 230 |
| | Tg (°C) | | 67 | 67 | 67 | 67 | 67 | 67 |
| Amount of remaining metal (ppm) | aluminum | | 30 | 30 | 30 | 30 | 30 | 30 |
| | phosphorus | | 77 | 77 | 77 | 77 | 77 | 77 |
| | molar ratio of phosphorus atom to aluminum atom | | 2.2 | 2.2 | 2.2 | 2.2 | 2.2 | 2.2 |
| | titanium | | - | - | - | - | - | - |
| | antimony | | - | - | - | - | - | - |
| | cobalt | | - | - | - | - | - | - |
| | lithium | | 7 | - | - | - | - | - |
| titanium oxide (ppm) | | | 12000.0 | - | - | - | - | - |
| toner (ppm) | | | - | 0.1 | 50.0 | - | - | - |
| Property evaluation | die contamination and foreign matter adhesion | | oo | oo | oo | oo | oo | oo |
| | Transparency | haze value (%) | 19.0 | 2.0 | 3.0 | 4.3 | 4.3 | 4.3 |
| | | DSC measurement | o | o | o | o | o | o |
| | Recyclability | thermal stability (TD) | 0.02 | 0.02 | 0.02 | 0.02 | 0.02 | 0.02 |
| | content of AA (ppm) | | 70 | 100 | 100 | 90 | 90 | 90 |
| | flavor properties | | oo | o | o | o | o | o |

| Items | | | Example 25 | Comparative Example 1 | Comparative Example 2 | Comparative Example 3 | Comparative Example 4 |
|---|---|---|---|---|---|---|---|
| Compositions of resins (mol%) | terephthalic acid | | 93.50 | 90.00 | 89.99 | 79.00 | 89.50 |
| | oxalic acid | | - | - | - | - | - |
| | malonic acid | | - | - | - | - | - |
| | succinic acid | | 6 | 10 | 10 | 10 | 10 |
| | sodium sulfoisophthalate | | 0.50 | - | 0.01 | 11.00 | 0.50 |
| | ethylene glycol | | 98.00 | 98.50 | 99.20 | 95.00 | 77.00 |
| | diethylene glycol | | 2.00 | 1.50 | 0.80 | 5.00 | 23.00 |
| Contents of by-product oligomers (ppm) | TS2E3 | | 4 | - | 1 | 42 | 10 |
| | L-T2SE4 | | 21 | - | 4 | 260 | 30 |
| Physical properties of resins | intrinsic viscosity (IV) (dl/g) | | 0.69 | 0.69 | 0.63 | 0.63 | 0.69 |
| | number-average molecular weight | | 9000 | 9000 | 9000 | 9000 | 9000 |
| | carboxyl end group concentration (AV) (eq/t) | | 16 | - | 15 | 19 | 10 |
| | color b value | | 2.3 | 6.0 | 3.3 | 10.2 | 16.0 |
| | color L value | | 89.0 | 90.0 | 90.0 | 82.0 | 81.0 |
| | melting point (°C) | | 258 | 260 | 260 | 225 | 210 |
| | Tg (°C) | | 67 | 78 | 68 | 48 | 40 |
| Amount of remaining metal (ppm) | aluminum | | 30 | - | 30 | 30 | 30 |
| | phosphorus | | 77 | - | 77 | 77 | 77 |
| | molar ratio of phosphorus atom to aluminum atom | | 2.2 | - | 2.2 | 2.2 | 2.2 |
| | titanium | | - | 20 | - | - | - |
| | antimony | | - | - | - | - | - |
| | cobalt | | - | - | - | - | - |
| | lithium | | - | - | - | - | - |
| titanium oxide (ppm) | | | - | - | - | - | - |
| toner (ppm) | | | - | - | - | - | - |
| Property evaluation | die contamination and foreign matter adhesion | | oo | oo | o | × | o |
| | Transparency | haze value (%) | 4.3 | 30.0 | 16.0 | 4.6 | 16.5 |
| | | DSC measurement | o | × | × | o | o |
| | Recyclability | thermal stability (TD) | 0.02 | 0.71 | 0.11 | 0.19 | 0.90 |
| | content of AA (ppm) | | 90 | 160 | 100 | 120 | 160 |
| | flavor properties | | o | × | o | o | × |

As can be seen from Table 1, Examples 1 to 25 satisfying all the requirements of the present invention do not cause die contamination and foreign matter adhesion and have excellent transparency (haze value, DSC measurement) and excellent recyclability (thermal stability). On the other hand, Comparative Example 1 uses only terephthalic acid as a dicarboxylic acid component without using sodium sulfoisophthalate (GCM). Comparative Example 2 uses a too small

amount of sodium sulfoisophthalate (GCM). Therefore, transparency (haze value, DSC measurement) and recyclability (thermal stability) are poor in Comparative Examples 1 and 2. Comparative Example 3 uses a too large amount of sodium sulfoisophthalate (GCM), and therefore has a high by-product oligomer (TS2E3, L-T2SE4) content and frequently causes die contamination and foreign matter adhesion. Comparative Example 4 uses a too large amount of diethylene glycol (DEG), and therefore has poor recyclability (thermal stability) and a high color b value.

Industrial Applicability

The copolymerized polyester resin of the present invention hardly causes die contamination and adhesion of foreign matter to products such as films, molded products, or fibers during continuous production of the products while having transparency and moldability as the advantages of using diethylene glycol and sodium sulfoisophthalate, and further hardly causes resin coloring and molecular weight reduction during recycling. Therefore, the present invention greatly contributes to industrial world.

## Claims

1. A copolymerized polyester resin containing terephthalic acid as a main dicarboxylic acid component and ethylene glycol as a main glycol component, wherein when a total amount of dicarboxylic acid components in all polyester resin components is taken as 100 mol%, a ratio of the terephthalic acid component to all the dicarboxylic acid components is 79.95 to 94.95 mol%, a ratio of the aliphatic acid having 2 to 4 carbon atoms to all the dicarboxylic acid components is 5 to 20 mol%, and a ratio of sodium sulfoisophthalate to all the dicarboxylic acid components is 0.05 to 10 mol%, when a total amount of glycol components is taken as 100 mol%, a ratio of diethylene glycol to all glycol components is 1 to 22 mol%, a content of a free cyclic monomer consisting of terephthalic acid, sodium sulfoisophthalate, and ethylene glycol is 40 ppm or less, and a content of a free linear oligomer consisting of terephthalic acid, sodium sulfoisophthalate, and ethylene glycol is 60 ppm or less.

2. The copolymerized polyester resin according to claim 1, wherein the copolymerized polyester resin has a color b value of from -5.0 to 15.0.

3. The copolymerized polyester resin according to claim 1, wherein the copolymerized polyester resin has a carboxyl end group concentration (AV) of from 3 to 25 eq/t.

4. The copolymerized polyester resin according to claim 1, wherein the copolymerized polyester resin contains aluminum atom and phosphorus atom, wherein a content of the aluminum atom in the copolymerized polyester resin is 15 to 40 ppm, and wherein a molar ratio of the phosphorus atom to the aluminum atom in the copolymerized polyester resin is more than 0 and not more than 2.6.

5. The copolymerized polyester resin according to claim 1, wherein the copolymerized polyester resin further contains an alkali metal atom and/or an alkaline-earth metal atom derived from an alkali metal compound and/or an alkaline-earth metal compound other than sodium sulfoisophthalate, and a content of the alkali metal atom and/or the alkaline-earth metal atom in the copolymerized polyester resin is 1 to 100 ppm.

6. The copolymerized polyester resin according to any of claims 1 to 5, wherein, when a corrugated molded plate is prepared by molding the copolymerized polyester resin and a haze value is measured on an area of the corrugated molded plate having a thickness of 3 mm, the haze value is 10% or less.

7. A molded product, **characterized in that**, it contains the copolymerized polyester resin mentioned in any of claims 1 to 5.

8. A heat-shrinkable film, **characterized in that**, it contains the copolymerized polyester resin mentioned in any of claims 1 to 5.

9. A fiber, **characterized in that**, it contains the copolymerized polyester resin mentioned in any of claims 1 to 5.

10. A non-woven fabric, **characterized in that**, it contains the copolymerized polyester resin mentioned in any of claims 1 to 5.

11. An adhesive, **characterized in that**, it contains the copolymerized polyester resin mentioned in any of claims 1 to 5.

12. A coating material, **characterized in that**, it contains the copolymerized polyester resin mentioned in any of claims 1 to 5.

**INTERNATIONAL SEARCH REPORT**

International application No.
**PCT/JP2023/018596**

**A. CLASSIFICATION OF SUBJECT MATTER**

***C08G 63/688***(2006.01)i
FI: C08G63/688

According to International Patent Classification (IPC) or to both national classification and IPC

**B. FIELDS SEARCHED**

Minimum documentation searched (classification system followed by classification symbols)

C08G63/00-63/91

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2021-017490 A (SNT CO) 15 February 2021 (2021-02-15)<br>claims, paragraphs [0002], [0010], [0059]-[0065], [0068], [0070], [0094]-[0099], [0108]-[0109], [0112]-[0124], table 1, test examples 9, 10 | 1-3, 5-12<br>4 |
| A | JP 2-043047 A (TORAY IND INC) 13 February 1990 (1990-02-13)<br>entire text | 1-12 |
| A | JP 2008-111076 A (TOYO BOSEKI) 15 May 2008 (2008-05-15)<br>entire text | 1-12 |
| A | JP 2007-284599 A (TEIJIN FIBERS LTD) 01 November 2007 (2007-11-01)<br>entire text | 1-12 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 July 2023** | **08 August 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/018596**

| Patent document cited in search report | Publication date (day/month/year) | Patent family member(s) | Publication date (day/month/year) |
|---|---|---|---|
| JP 2021-017490 A | 15 February 2021 | (Family: none) | |
| JP 2-043047 A | 13 February 1990 | (Family: none) | |
| JP 2008-111076 A | 15 May 2008 | (Family: none) | |
| JP 2007-284599 A | 01 November 2007 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010150542 A
- JP 4755995 B
- JP 4614963 B
- JP 2007500769 A
- JP 4807952 B
- JP 5345749 B